# EUROPEAN PATENT APPLICATION

(11) **EP 2 599 813 A2**
(43) Date of publication of application: **05.06.2013**
(21) Application number: 12194572.9
(22) Date of filing: 28.11.2012
(51) Int. Cl.: C08G 63/52, C08G 63/91, C08G 63/685, B41C 1/05, B41N 1/12

(54) **Resin composition for flexographic printing plate, flexographic printing plate precursor for laser engraving and process for producing same, and flexographic printing plate and process for making same**

(30) Priority: 30.11.2011 JP 2011261740
(71) Applicant: Fujifilm Corporation, Minato-ku Tokyo (JP)
(72) Inventor: Ushijima, Kenta, Shizuoka (JP); Sugasaki, Atsushi, Shizuoka (JP); Wada, Kenji, Shizuoka (JP); Yoshida, Kenta, Shizuoka (JP); Kanchiku, Shigefumi, Shizuoka (JP)
(74) Representative: HOFFMANN EITLE

(57) **Abstract**

A resin composition for a flexographic printing plate that comprises comprising (Component A) a polyester resin having an ethylenically unsaturated bond in the interior and at a terminal.

A process for producing a flexographic printing plate precursor that preferably comprises a layer formation step of forming a relief-forming layer comprising the resin composition for a flexographic printing plate.

A process for producing a flexographic printing plate precursor that preferably comprises a layer formation step of forming a relief-forming layer comprising the resin composition for a flexographic printing plate; and a crosslinking step of crosslinking the relief-forming layer by means of light and/or heat to thus obtain a flexographic printing plate precursor comprising a crosslinked relief-forming layer.

## Description

The present invention relates to a resin composition for a flexographic printing plate, a flexographic printing plate precursor for laser engraving and a process for producing the same, and a flexographic printing plate and a process for making the same.

As a process for forming a printing plate by forming asperities in a photosensitive resin layer layered on a support surface area, a method in which a relief-forming layer formed using a photosensitive composition is exposed to UV light through an original image film to thus selectively cure an image area, and an uncured area is removed using a developer, the so-called 'analogue plate making', is well known.

A relief printing plate is a letterpress printing plate having a relief layer with asperities, and such a relief layer with asperities is obtained by patterning a relief-forming layer comprising a photosensitive composition containing as a main component, for example, an elastomeric polymer such as a synthetic rubber, a resin such as a thermoplastic resin, or a mixture of a resin and a plasticizer, thus forming asperities.

As a flexographic printing plate, those described in JP-A-2009-235295 (JP-A denotes a Japanese unexamined patent application publication) or JP-A-2009-235296 are known.

It is an object of the present invention to provide a resin composition for a flexographic printing plate that can give a flexographic printing plate having excellent printing durability and ink laydown, a flexographic printing plate precursor and a process for producing same employing the resin composition for a flexographic printing plate, and a flexographic printing plate and a process for making same.

The object of the present invention has been attained by solution means <1>, <8>, <9>, <10>, <12>, and <13> below. They are described below together with <2> to <7>, <11>, and <14>, which are preferred embodiments.
<1> A resin composition for a flexographic printing plate, comprising (Component A) a polyester resin having an ethylenically unsaturated bond in the interior and at a terminal,
<2> the resin composition for a flexographic printing plate according to <1> above, wherein a group comprising the ethylenically unsaturated bond at a terminal of Component A is a group represented by Formula (1) below, 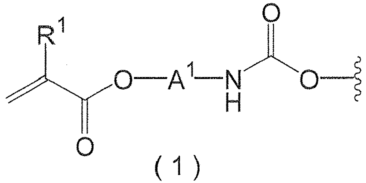 wherein in Formula (1), R¹ denotes a hydrogen atom or a methyl group, A¹ denotes a divalent linking group, and the wavy line portion denotes the position of bonding to another structure,
<3> the resin composition for a flexographic printing plate according to <1> or <2> above, wherein Component A is a resin represented by Formula (2) below, 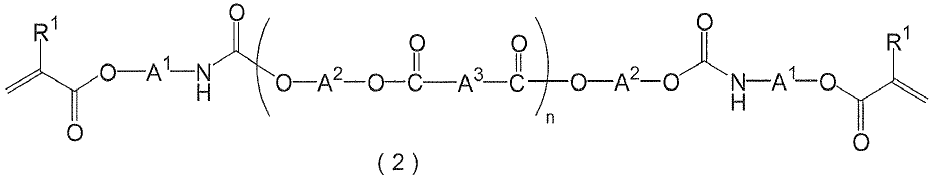 wherein in Formula (2), the R¹s independently denote a hydrogen atom or a methyl group, the A¹s, the A²s, and the A³s independently denote a divalent linking group, n denotes an integer of 1 or more, and at least one of A² and A³ is an ethylenically unsaturated bond-containing divalent linking group,
<4> the resin composition for a flexographic printing plate according to any one of <1> to <3> above, wherein Component A is a resin represented by Formula (3) below, 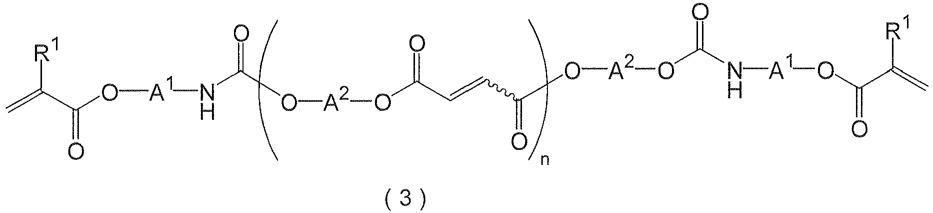 wherein in Formula (3), the R¹s independently denote a hydrogen atom or a methyl group, the A¹s and the A²s independently denote an alkylene group, and n denotes an integer of 1 or more,
<5> the resin composition for a flexographic printing plate according to any one of <1> to <4> above, wherein the resin composition further comprises (Component B) a polymerization initiator,
<6> the resin composition for a flexographic printing plate according to any one of <1> to <5> above, wherein the resin composition further comprises (Component C) an ethylenically unsaturated compound other than Component A,
<7> the resin composition for a flexographic printing plate according to any one of <1> to <6> above, wherein the resin composition is a resin composition for a laser-engraving type flexographic printing plate,
<8> a flexographic printing plate precursor comprising a relief-forming layer comprising the resin composition for a flexographic printing plate according to any one of <1> to <7> above,
<9> a flexographic printing plate precursor, comprising a crosslinked relief-forming layer formed by crosslinking by means of light and/or heat a relief-forming layer comprising the resin composition for a flexographic printing plate according to any one of <1> to <7> above,
<10> a process for producing a flexographic printing plate precursor, comprising a layer formation step of forming a relief-forming layer comprising the resin composition for a flexographic printing plate according to any one of <1> to <7> above, and a crosslinking step of crosslinking the relief-forming layer by means of light and/or heat to thus obtain a flexographic printing plate precursor comprising a crosslinked relief-forming layer,
<11> the process for producing a flexographic printing plate precursor according to <10> above, wherein the crosslinking step is a step of crosslinking the relief-forming layer by means of light to thus obtain a flexographic printing plate precursor comprising a crosslinked relief-forming layer,
<12> a process for making a flexographic printing plate, comprising an engraving step of laser-engraving the crosslinked relief-forming layer of the flexographic printing plate precursor according to <9> above to thus form a relief layer,
<13> a flexographic printing plate comprising a relief layer made by the process for making a flexographic printing plate according to <12> above, and <14> the flexographic printing plate according to <13> above, wherein the relief layer has a thickness of at least 0.05 mm but no greater than 10 mm.

In accordance with the present invention, there can be provided a resin composition for a flexographic printing plate that can give a flexographic printing plate having excellent printing durability and ink laydown, a flexographic printing plate precursor and a process for producing same employing the resin composition for a flexographic printing plate, and a flexographic printing plate and a process for making same.

The present invention is explained in detail below.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, they are numerical ranges that include the upper limit and the lower limit.

Furthermore, '(Component A) a polyester resin having an ethylenically unsaturated bond in the interior and at a terminal' etc. are simply called 'Component A' etc.

### (Resin composition for a flexographic printing plate)

The resin composition for a flexographic printing plate (hereinafter, also called simply a 'resin composition') of the present invention comprises (Component A) a polyester resin having an ethylenically unsaturated bond in the interior and at a terminal.

The resin composition for a flexographic printing plate of the present invention may be applied to a wide range of uses where it is subjected to laser engraving, other than use as a relief-forming layer of a flexographic printing plate precursor, without particular limitations. For example, it may be applied not only to a relief-forming layer of a printing plate precursor where formation of a raised relief is carried out, which is explained in detail below, but also to the formation of various types of printing plates or various types of moldings in which image formation is carried out by laser engraving, such as another material form having asperities or openings formed on the surface such as for example an intaglio printing plate, a stencil printing plate, or a stamp.

Among them, the application thereof to the formation of a relief-forming layer provided on an appropriate support is a preferred embodiment.

The resin composition for a flexographic printing plate of the present invention is preferably used as a resin composition for a laser engraving type flexographic printing plate.

In the present specification, with respect to explanation of the flexographic printing plate precursor, a non-crosslinked crosslinkable layer comprising Component A and having a flat surface as an image formation layer that is subjected to laser engraving is called a relief-forming layer, a layer that is formed by crosslinking the relief-forming layer is called a crosslinked relief-forming layer, and a layer that is formed by subjecting this to laser engraving so as to form asperities on the surface is called a relief layer.

Constituent components of the resin composition for a flexographic printing plate are explained below.

### (Component A) Polyester resin having ethylenically unsaturated bond in interior and at terminal

The resin composition for a flexographic printing plate of the present invention comprises (Component A) a polyester resin having an ethylenically unsaturated bond in the interior and at a terminal.

In the present invention, the 'terminal' of a resin means the position of a carbon atom that is at the endmost position of a main chain or a side chain of the resin and, for example, an ethylenically unsaturated bond at a terminal of a resin means an ethylenically unsaturated bond between the carbon atom at a terminal and the carbon atom adjacent to this carbon atom. Furthermore, the 'interior' of a resin means a polymer chain portion other than a carbon atom positioned at a terminal as described above and, for example, an ethylenically unsaturated bond in the interior of a resin means an ethylenically unsaturated bond between two carbon atoms other than a carbon atom positioned at a terminal.

For example, in the case of a straight-chain resin, two positions at opposite ends of the polymer chain are termini and, needless to say, in the case of a star polymer, etc., each dendrimer chain has a terminal.

Component A is preferably a straight-chain resin. When it is a straight chain, a resin having uniform structure and physical properties can easily be obtained, and ink laydown is also excellent.

Furthermore, Component A preferably does not contain a bond that can form a hydrogen bond, such as a hydroxy group, a urethane bond, an amide bond, or a urea bond, in the interior of the polymer apart from two urethane bonds that are required when introducing a terminal ethylenically unsaturated bond. If a bond that can form a hydrogen bond is present in the interior of the polymer, when the resin composition is cured, the Tg increases, the film becomes hard, and printing durability and ink laydown are degraded.

The ethylenically unsaturated bond in the interior of Component A may be present in a polycarboxylic acid-derived monomer unit or in a polyhydric alcohol-derived monomer unit, may be present in both thereof, or may be present in a hydroxycarboxylic acid-derived monomer unit, but from the viewpoint of cost and synthesis, it is preferably present in a polycarboxylic acid-derived monomer unit.

Component A is preferably an aliphatic polyester resin. Furthermore, Component A is preferably a polyester resin formed from a polycarboxylic acid and a polyhydric alcohol, and more preferably a polyester resin formed from a dicarboxylic acid and a diol. With regard to the polycarboxylic acid and the dicarboxylic acid, a corresponding acid anhydride may be employed as a starting material.

Examples of monomers forming a polyester chain of Component A include, but are not particularly limited to, those below.

Preferred examples of polycarboxylic acids having an ethylenically unsaturated bond include maleic acid, maleic anhydride, fumaric acid, itaconic acid, itaconic anhydride, citraconic acid, mesaconic acid, citraconic anhydride, and dimer acid. Among them, maleic acid, maleic anhydride, and fumaric acid are particularly preferable.

Preferred examples of polyhydric alcohols having an ethylenically unsaturated bond include butenediol, pentenediol, hexenediol, cyclohexenediol, and cyclohexenedimethanol.

Examples of polycarboxylic acids that do not have an ethylenically unsaturated bond include oxalic acid, succinic acid (anhydride), adipic acid, azelaic acid, sebacic acid, dodecanedioic acid, icosanedioic acid, and hydrogenated dimer acid.

Examples of polyhydric alcohols that do not have an ethylenically unsaturated bond include, but are not particularly limited to, an aliphatic glycol, an alicyclic glycol, and an ether bond-containing glycol.

Specific examples of the aliphatic glycol include ethylene glycol, 1,2-propanediol, 1,3-propanediol, 1,4-butanediol, 2-methyl-1,3-propanediol, 1,5-pentanediol, neopentyl glycol, 1,6-hexanediol, 3-methyl-1,5-pentanediol, 1,9-nonanediol, and 2-ethyl-2-butylpropanediol.

Examples of the alicyclic glycol include 1,4-cyclohexanedimethanol.

Examples of the ether bond-containing glycol include diethylene glycol, triethylene glycol, dipropylene glycol, polyethylene glycol, polypropylene glycol, polytetramethylene glycol and, furthermore, a glycol such as 2,2-bis(4-hydroxyethoxyphenyl)propane that is obtained by adding one to a few moles of ethylene oxide or propylene oxide to each of the two phenolic hydroxy groups of a bisphenol.

Among them, the polyhydric alcohol is preferably an aliphatic glycol, and particularly preferably ethylene glycol, 1,2-propylene glycol, or 1,3-propanediol.

Examples of the hydroxycarboxylic acid include glycolic acid, lactic acid, hydroxybutyric acid, hydroxyvaleric acid, hydroxypentanoic acid, hydroxycaproic acid, and hydroxyheptanoic acid.

Examples of the structure comprising an ethylenically unsaturated bond at a terminal of Component A include a (meth)acrylic group, a vinyl group, a vinyloxy group, an allyl group, and a styryl group. Among them, a group selected from the group consisting of a (meth)acrylic group, an allyl group, and a vinyloxy group is preferable, a (meth)acrylic group is more preferable, and a (meth)acryloxy group is yet more preferable. In the above-mentioned mode, a flexographic printing plate that is obtained has better printing durability and ink laydown.

Furthermore, the group having an ethylenically unsaturated bond at a terminal of Component A is preferably a group represented by Formula (1) below. 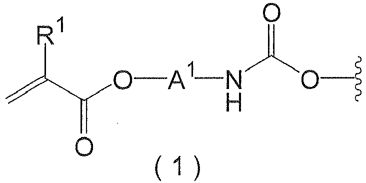 (In Formula (1), R¹ denotes a hydrogen atom or a methyl group, A¹ denotes a divalent linking group, and the wavy line portion denotes the position of bonding to another structure.)

From the viewpoint of cost and synthesis, R¹ in Formula (1) is preferably a methyl group.

From the viewpoint of printing durability and ink laydown, A¹ in Formula (1) is preferably an alkylene group or a group formed by combining two or more alkylene groups and one or more ether bonds, and more preferably an alkylene group.

The alkylene group may be straight chain or branched or may have a cyclic structure, but is preferably straight chain. The number of carbons of the above alkylene group is preferably 2 to 20, more preferably 2 to 8, and yet more preferably 2 to 4.

Component A is preferably a resin represented by Formula (2) below. 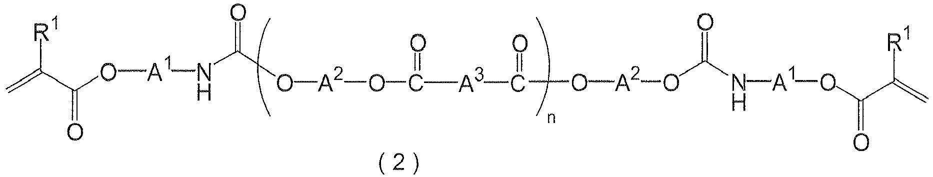 (In Formula (2), the R¹s independently denote a hydrogen atom or a methyl group, the A¹s, the A²s, and the A³s independently denote a divalent linking group, n denotes an integer of 1 or more, and at least one of A² and A³ is an ethylenically unsaturated bond-containing divalent linking group.)

R¹ and A¹ in Formula (2) have the same meanings as those of R¹ and A¹ in Formula (1) above, and preferred embodiments are also the same. Furthermore, the two R¹s in Formula (2) are preferably identical groups, and the two A¹s in Formula (2) are preferably identical groups.

In Formula (2), at least one of A² and A³ may be a divalent linking group having an ethylenically unsaturated bond; it is preferable for at least one of the A³s to be a divalent linking group having an ethylenically unsaturated bond, and it is particularly preferable for all of the A³s in Formula (2) to be a divalent linking group having an ethylenically unsaturated bond.

From the viewpoint of printing durability and ink laydown, A² in Formula (2) is preferably an alkylene group, an alkenylene group, or a group formed by combining two or more groups selected from the group consisting of an alkylene group and an alkenylene group and one or more structures selected from the group consisting of an ether bond, a thioether bond, a carbonate bond, and a carbonyl group; it is more preferably an alkylene group or an alkenylene group, and particularly preferably an alkylene group.

From the viewpoint of printing durability and ink laydown, A³ in Formula (2) is an alkylene group, an alkenylene group, or a group formed by combining two or more groups selected from the group consisting of an alkylene group and an alkenylene group and one or more structures selected from the group consisting of an ether bond, a thioether bond, a carbonate bond, and a carbonyl group; it is more preferably an alkylene group or an alkenylene group, yet more preferably an alkenylene group, and particularly preferably a vinylene group.

The alkylene group and the alkenylene group may be straight chain or branched or may have a cyclic structure, but are preferably straight chain. The number of carbons of the alkylene group is preferably 2 to 20, more preferably 2 to 8, and yet more preferably 2 to 4. The number of carbons of the alkenylene group is preferably 2 to 20, more preferably 2 to 8, yet more preferably 2 to 4, and particularly preferably 2.

Furthermore, n in Formula (2) may be any value as long as it is an integer of 1 or more and gives a desired average molecular weight, but is preferably an integer of 2 to 1,000, and more preferably an integer of 3 to 500.

Component A is more preferably a resin represented by Formula (3) below. 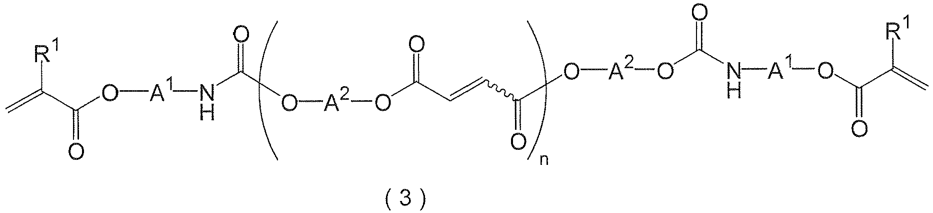 (In Formula (3), the R¹s independently denote a hydrogen atom or a methyl group, the A¹s and the A²s independently denote an alkylene group, and n denotes an integer of 1 or more.)

R¹, A¹, and n in Formula (3) have the same meanings as those of R¹, A¹, and n in Formula (2) above, and preferred embodiments are also the same.

From the viewpoint of printing durability and ink laydown, A² in Formula (3) is preferably an alkylene group having 2 to 20 carbons, more preferably an alkylene group having 2 to 8 carbons, and yet more preferably an alkylene group having 2 to 4 carbons. The alkylene group and the alkenylene group may be straight chain or branched or may have a cyclic structure, but are preferably straight chain.

The number-average molecular weight Mn of Component A is preferably 1,000 to 200,000, more preferably 2,000 to 150,000, yet more preferably 3,000 to 100,000, and particularly preferably 5,000 to 100,000. A resin composition produced using Component A having a number-average molecular weight in this range is easy to process; moreover, a precursor that is produced by subsequent crosslinking maintains its strength, and a relief image produced from this precursor is strong and can withstand repeated use. The number-average molecular weight of Component A may be measured using a GPC (gel permeation chromatography) method and determined using a standard polystyrene calibration curve.

At 20°C, Component A is preferably a plastomer.

The 'plastomer' in the present invention means a polymer having the property of easily undergoing deformation by flowing and being able to be solidified in the deformed shape by cooling, as described in 'New Polymer Dictionary' Ed. by the Society of Polymer Science, Japan (Published in 1988, Asakura Publishing Co., Ltd., Japan). The term plastomer is the opposite of an elastomer (having the property, when an external force is applied, of deforming in response to the external force and, when the external force is removed, recovering to the original shape in a short time).

In the present invention, the plastomer means that, when the original dimensions are 100%, it can be deformed up to 200% by means of a small external force at room temperature (20°C) and will not return to 130% or below even if the external force is removed. More particularly, the plastomer means a polymer with which, based on the tensile permanent strain test of JIS K 6262-1997, an I-shaped specimen can be extended to 2 times the gauge length before pulling in a tensile test at 20°C, and the tensile permanent strain measured after extending the specimen to 2 times the gauge length before pulling, subsequently maintaining the specimen for 5 minutes, removing the external tensile force, and maintaining the specimen for 5 minutes, is 30% or greater.

Meanwhile, in the case of a polymer that cannot be subjected to the measurement described above, a polymer which is deformed even if an external force is not applied and does not return to the original shape, corresponds to a plastomer, and for example, at 20°C, a syrup-like resin, an oillike resin, and a liquid resin correspond thereto.

Furthermore, the plastomer of the present application preferably has a polymer glass transition temperature (Tg) of less than 20°C. In the case of a polymer having two or more Tgs, all of the Tgs are less than 20°C.

The viscosity at 20°C of Component A is preferably 0.5 Pa·s to 10 kPa·s, more preferably 10 Pa·s to 10 kPa·s, and yet more preferably 50 Pa·s to 5 kPa·s. When the viscosity is in this range, it is easy to mold the resin composition into a sheet-shaped or cylindrical printing plate precursor, and the process is also easy. In the present invention, due to Component A being a plastomer, when molding a printing plate precursor for laser engraving obtained therefrom into a sheet shape or a cylindrical shape, good thickness precision and dimensional precision can be achieved.

With regard to Component A in the resin composition of the present invention, only one type thereof may be used or two or more types thereof may be used in combination.

The content of Component A in the resin composition is preferably 5 to 90 wt% relative to the total solids content, more preferably 15 to 85 wt%, and yet more preferably 30 to 80 wt%. It is preferable for the content of Component A to be in the above-mentioned range since the printing durability and the ink laydown are excellent and a flexible relief layer is obtained.

The resin composition for a flexographic printing plate of the present invention may comprise a binder polymer (resin component) other than Component A. The examples of the binder polymer other than Component A include the non-elastomers described in JP-A-2011-136455, and the unsaturated group-containing polymers described in JP-A-2010-208326.

The resin composition for a flexographic printing plate of the present invention preferably comprises Component A as a main component of the binder polymers, and if the resin composition comprises other binder polymers, the content of Component A relative to the total weight of the binder polymers is preferably 60 wt% or greater, more preferably 70 wt% or greater, and yet more preferably 80 wt% or greater. Meanwhile, the upper limit of the content of Component A is not particularly limited, but if the resin composition comprises other binder polymers, the upper limit thereof is preferably 99 wt% or less, more preferably 97 wt% or less, and yet more preferably 95 wt% or less.

### (Component B) Polymerization initiator

The resin composition for a flexographic printing plate of the present invention comprises (Component B) a polymerization initiator.

With regard to the polymerization initiator, one known to a person skilled in the art may be used without any limitations. Radical polymerization initiators, which are preferred polymerization initiators, are explained in detail below, but the present invention should not be construed as being limited to these descriptions.

In the present invention, as (Component B) the polymerization initiator, a radical polymerization initiator is preferable.

The polymerization initiator may be a photopolymerization initiator or a thermopolymerization initiator, and is preferably a photopolymerization initiator.

In the present invention, preferable polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (I) azo compounds. Hereinafter, although specific examples of the (a) to (I) are cited, the present invention is not limited to these.

The photopolymerization initiator may be selected appropriately from known initiators, and examples include polymerization initiators for radical polymerization, cationic polymerization, anionic polymerization, etc. cited in 'Polymer Data Handbook - Basics' edited by the Society of Polymer Science, Japan (1986, Baifukan). Carrying out crosslinking of a relief-forming layer by photopolymerization using a photopolymerization initiator enables a printing plate precursor or a printing plate to be produced with good productivity while maintaining storage stability.

Specific examples of the photopolymerization initiator include benzoin, a benzoin alkyl ether such as benzoin ethyl ether; an acetophenone such as 2-hydroxy-2-methyfpropiophenone, 4'-isopropyl-2-hydraxy-2-methylpropiophenone, 2,2-dimethoxy-2-phenylacetophenone, or diethoxyacetophenone; a radical photopolymerization initiator such as 1-hydroxycyclohexyl phenyl ketone, 2-methyl-1-[4-(methylthio)phenyl]-2-morpholinopropan-1-one, methyl phenylglyoxylate, benzophenone, benzil, diacetyl, diphenyl sulfide, eosin, thionine, or an anthraquinone; a cationic photopolymerization initiator such as an aromatic diazonium salt, an aromatic iodonium salt, or an aromatic sulfonium salt, which generate an acid by absorbing light; and an anionic photopolymerization initiator, which generates a base by absorbing light.

In the present invention, when applies to the relief-forming layer of the flexographic printing plate precursor, from the viewpoint of engraving sensitivity and making a favorable relief edge shape, as a thermopolymerization initiator, (c) organic peroxides and (I) azo compounds are more preferable, and (c) organic peroxides are particularly preferable. (c) Organic peroxide

Preferred examples of the organic peroxide (c) as a polymerization initiator that can be used in the present invention include peroxyester-based ones such as 3,3',4,4'-tetra*(t*-butylperoxycarbonyl)benzophenone, 3,3',4,4'-tetra*(t*-amylperoxycarbonyl)benzophenone, 3,3',4,4'-tetra*(t-*hexylperoxycarbonyl)benzophenone, 3,3',4,4'-tetra*(t-*octylperoxycarbonyl)benzophenone, 3,3',4,4'-tetra(cumylperoxycarbonyl)bonzophenone, 3,3',4,4'-tetra*(p-*isopropylcumylperoxycarbonyl)benzophenone, di-*t*-butyldiperoxyisophthalate, *t-*butylperoxybenzoate, *t*-butylperoxy-3-methylbenzoate, *t*-butylperoxylaurate, *t-*butylperoxypivalate, *t*-butylperoxy-2-ethylhexanoate, *t*-butylperoxy-3,5,5-trimethylhexanoate, *t*-butylperoxyneoheptanoate, *t*-butylperoxyneodecanoate, and *t*-butylperoxyacetate, α,α'-di(*t*-butylperoxy)diisopropylbenzene, *t-*butylcumylperoxide, di-*t*-butylperoxido, *t*-butylperoxyisopropylmonocarbonate, and *t*-butylperoxy-2-ethylhexylmonocarbonate.

### (I) Azo compounds

Preferable (I) azo compounds as a polymerization initiator that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

In the present invention, as a thermopolymerization initiator, the organic peroxide (c) is particularly preferable as the polymerization initiator in the present invention from the viewpoint of crosslinking properties of the film (relief-forming layer) and improving the engraving sensitivity.

From the viewpoint of the engraving sensitivity, an embodiment obtained by combining (c) an organic peroxide, Component A and a photothermal conversion agent described below is particularly preferable.

This is presumed as follows. When the relief-forming layer is cured by thermal crosslinking using an organic peroxide, an organic peroxide that did not play a part in radical generation and has not reacted remains, and the remaining organic peroxide works as an autoreactive additive and decomposes exothermally in laser engraving. As the result, energy of generated heat is added to the irradiated laser energy to thus raise the engraving sensitivity.

It will be described in detail in the explanation of photothermal converting agent, the effect thereof is remarkable when carbon black is used as the photothermal converting agent. It is considered that the heat generated from the carbon black is also transmitted to (c) an organic peroxide and, as the result, heat is generated not only from the carbon black but also from the organic peroxide, and that the generation of heat energy to be used for the decomposition of Component A etc. occurs synergistically.

Component B in the resin composition of the present invention may be used singly or in a combination of two or more compounds.

The content of Component B in the resin composition of the present invention is preferably 0.1 to 5 wt% relative to the total weight of the solids content, more preferably 0.3 to 3 wt%, and particularly preferably 0.5 to 1.5 wt%.

### (Component C) Ethylenically unsaturated compound other than Component A

The resin composition for a flexographic printing plate of the present invention preferably contains (Component C) an ethylenically unsaturated compound other than Component A (also called an "ethylenically unsaturated compound" or a "monomer").

Furthermore, the ethylenically unsaturated compound that can be used in the present invention preferably has a molecular weight (or weight average molecular weight) of less than 5,000.

The ethylenically unsaturated compound may arbitrarily be selected from compounds having at least one ethylenically unsaturated group. The ethylenically unsaturated compound may be used only one type or may be used two or more types in combination.

These compound groups are widely known in the present industrial field, and, in the present invention, these may be used without particular limitation. These have chemical forms such as a monomer, a prepolymer, that is, a dimer, a trimer and an oligomer, or copolymers of monomers, and mixtures thereof.

Component B is preferably a two or more functional ethylenically unsaturated compound (a polyfunctional ethylenically unsaturated compound).

Hereinafter, monofunctional monomers having one ethylenically unsaturated group, and polyfunctional monomers having two or more ethylenically unsaturated groups are explained.

In the resin composition of the present invention, polyfunctional monomers are preferably used in order to form a crosslinked structure in the film. The polyfunctional ethylenically unsaturated compound has preferably a molecular weight of 200 to 2,000.

Examples of the monofunctional monomers include esters of an unsaturated carboxylic acid (such as acrylic acid, methacrylic acid, itaconic acid, crotonic acid, isocrotonic acid or maleic acid) with a monovalent alcohol compound, amides of an unsaturated carboxylic acid with a monovalent amine compound, etc. Examples of the polyfunctional monomers include esters of an unsaturated carboxylic acid (such as acrylic acid, methacrylic acid, itaconic acid, crotonic acid, isocrotonic acid or maleic acid) with a polyvalent alcohol compound, amides of an unsaturated carboxylic acid with a polyvalent amine compound, etc.

Further, addition products of an unsaturated carboxylic acid ester or amide having a nucleophilic substituent such as a hydroxy group, an amino group or a mercapto group with a monofunctional or polyfunctional isocyanate compound or an epoxy compound, dehydrating condensation products with a monofunctional or polyfunctional carboxylic acid, etc. are preferably used.

Furthermore, the product of an addition reaction between an unsaturated carboxylic acid ester or amide having an electrophilic substituent such as an isocyanate group or an epoxy group and a monofunctional or polyfunctional alcohol, amine, or thiol, and the product of a substitution reaction between an unsaturated carboxylic acid ester or amide having a leaving substituent such as a halogeno group or a tosyloxy group and a monofunctional or polyfunctional alcohol, amine, or thiol may suitably be used.

Among them, from the viewpoint of copolymerizability with Component A, the monofunctional monomer is preferably a compound having an ethylenically unsaturated group, and a derivative of (meth)acrylic acid is particularly preferable. Specific examples include methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-hexyl (meth)acrylate, 2-ethylhexyl (meth)acrylate, acetoxyethyl (meth)acrylate, phenyl (meth)acrylate, 2-methoxyethyl (meth)acrylate, 2-ethoxyethyl (meth)acrylate, 2-(2-methoxyethoxy)ethyl (meth)acrylate, cyclohexyl (meth)acrylate, benzyl (meth)acrylate, 2-hydroxyethyl (meth)acrylate, 2-hydroxypropyl (meth)acrylate, 4-hydroxybutyl (meth)acrylate, diethylene glycol monomethyl ether (meth)acrylate, diethylene glycol monoethyl ether (meth)acrylate, diethylene glycol monophenyl ether (meth)acrylate, triethylene glycol monomethyl ether (meth)acrylate, triethylene glycol monoethyl ether (meth)acrylate, dipropylene glycol monomethyl ether (meth)acrylate, polyethylene glycol monomethyl ether (meth)acrylate, polypropylene glycol monomethyl ether (meth)acrylate, a monomethyl ether (meth)acrylate of a copolymer between ethylene glycol and propylene glycol, *N,N-*dimethylaminoethyl (meth)acrylate, *N,N*-diethylaminoethyl (meth)acrylate, and *N,N*-dimethylaminopropyl (meth)acrylate. Among them, from the viewpoint of ink laydown, an alkyl (meth)acrylate such as lauryl (meth)acrylate or 2-ethylhexyl (meth)acrylate, a (meth)acrylate having an ether bond in a side chain such as polyethylene glycol monomethyl ether (meth)acrylate or polypropylene glycol monomethyl ether (meth)acrylate, a (meth)acrylate having a hydroxy group such as 2-hydroxyethyl (meth)acrylate, 2-hydroxypropyl (meth)acrylate, or 4-hydroxybutyl (meth)acrylate, and a (meth)acrylate having an aliphatic cyclic structure such as t-butylcyclohexyl methacrylate are particularly preferable.

As the polyfunctional ethylenically unsaturated compound, a compound having 2 to 20 terminal ethylenically unsaturated groups is preferable.

Examples of compounds from which the ethylenically unsaturated group in the polyfunctional monomer is derived include unsaturated carboxylic acids (such as acrylic acid, methacrylic acid, itaconic acid, crotonic acid, isocrotonic acid and maleic acid), and esters and amides thereof. Preferably esters of an unsaturated carboxylic acid and an aliphatic polyhydric alcoholic compound, or amides of an unsaturated carboxylic acid and an aliphatic polyvalent amine compound are used. Moreover, addition reaction products of unsaturated carboxylic acid esters or amides having a nucleophilic substituent such as a hydroxyl group or an amino group with polyfunctional isocyanates or epoxies, and dehydrating condensation reaction products with a polyfunctional carboxylic acid, etc. are also used preferably. Moreover, addition reaction products of unsaturated carboxylic acid esters or amides having an electrophilic substituent such as an isocyanato group or an epoxy group with monofunctional or polyfunctional alcohols or amines, and substitution reaction products of unsaturated carboxylic acid esters or amides having a leaving group such as a halogen group or a tosyloxy group with monofunctional or polyfunctional alcohols or amines are also favorable. Moreover, as another example, the use of compounds obtained by replacing the unsaturated carboxylic acid with a vinyl compound, an allyl compound, an unsaturated phosphonic acid, styrene or the like is also possible.

The polyfunctional monomer described above is preferably an acrylate compound, a methacrylate compound, a vinyl compound, or an aryl compound, and is particularly preferably an acrylate compound or a methacrylate compound.

Specific examples of ester monomers comprising an ester of an aliphatic polyhydric alcohol compound and an unsaturated carboxylic acid include acrylic acid esters such as ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, and a polyester acrylate oligomer.

Examples of methacrylic acid esters include tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[*p*-(3-methacryloxy-2-hydroxypropoxy)phenyl]dimethylmethane, and bis[*p-*(methacryloxyethoxy)phenyl]dimethylmethane. Among them, trimethylolpropane trimethacrylate is particularly preferable.

As examples of other esters, aliphatic alcohol-based esters described in JP-B-46-27926, JP-B-51-47334 and JP-A-57-196231, those having an aromatic skeleton described in JP-A-59-5240, JP-A-59-5241, and JP-A-2-226149, those having an amino group described in JP-A-1-165613, etc. may also be used preferably.

The ester monomers may be used as a mixture.

Furthermore, specific examples of amide monomers including an amide of an aliphatic polyamine compound and an unsaturated carboxylic acid include *N,N'*-methylenebisacrylamide, *N,N'*-methylenebismethacrylamide, 1,6-hexamethylenebisacrylamide, 1,6-hexamethylenebismethacrylamide, diethylenetriaminetrisacrylamide, xylylenebisacrylamide, and xylylenebismethacrylamide.

Preferred examples of other amide-based monomers include those having a cyclohexylene structure described in JP-B-54-21726.

Furthermore, a urethane-based addition-polymerizable compound produced by an addition reaction of an isocyanate and a hydroxy group is also suitable, and specific examples thereof include a vinylurethane compound comprising two or more polymerizable vinyl groups per molecule in which a hydroxy group-containing vinyl monomer represented by Formula (i) below is added to a polyisocyanate compound having two or more isocyanate groups per molecule described in JP-B-48-41708.

CH₂=C(R)COOCH₂CH(R')OH (i)

wherein R and R' independently denote H or CH₃.

Furthermore, urethane acrylates described in JP-A-51-37193, JP-B-2-32293, and JP-B-2-16765, and urethane compounds having an ethylene oxide-based skeleton described in JP-B-58-49860, JP-B-56-17654, JP-B-62-39417, JP-B-62-39418 are also suitable.

Furthermore, by use of an addition-polymerizable compound having an amino structure or a sulfide structure in the molecule described in JP-A-63-277653, JP-A-63-260909, and JP-A-1-105238, a photosensitive resin composition having very good photosensitive speed can be obtained.

Other examples include polyester acrylates such as those described in JP-A-48-64183, JP-B-49-43191, and JP-B-52-30490, and polyfunctional acrylates and methacrylates such as epoxy acrylates formed by a reaction of an epoxy resin and (meth)acrylic acid. Examples also include specific unsaturated compounds described in JP-B-46-43946, JP-B-1-40337, and JP-B-1-40336, and vinylphosphonic acid-based compounds described in JP-A-2-25493. In some cases, perfluoroalkyl group-containing structures described in JP-A-61-22048 are suitably used. Moreover, those described as photocuring monomers or oligomers in the Journal of the Adhesion Society of Japan, Vol. 20, No. 7, pp. 300 to 308 (1984) may also be used.

Among these, Component C preferably includes a polyalkylene glycol di(meth)acrylate, more preferably includes polyethylene glycol di(meth)acrylate, polypropylene glycol di(meth)acrylate, and/or polyethylene glycol polypropylene glycol di(meth)acrylate, and particularly preferably includes polyethylene glycol di(meth)acrylate.

The content of Component C contained in the resin composition of the present invention is preferably 1 to 90 wt%, more preferably 10 to 80 wt%, yet more preferably 10 to 60 wt%, and particularly preferably 10 to 40 wt%. When the content is in the range described above, a flexographic printing plate that is obtained has excellent print durability.

### (Component D) Photothermal conversion agent

The resin composition for a flexographic printing plate of the present invention preferably further includes a photothermal conversion agent. That is, it is considered that the photothermal conversion agent in the present invention can promote the thermal decomposition of a cured material during laser engraving by absorbing laser light and generating heat, when the resin composition is a resin composition for a laser engraving type flexographic printing plate. Therefore, it is preferable that a photothermal conversion agent capable of absorbing light having a wavelength of laser used for graving be selected.

When a laser (a YAG laser, a semiconductor laser, a fiber laser, a surface emitting laser, etc.) emitting infrared at a wavelength of 700 to 1,300 nm is used as a light source for laser engraving, it is preferable for the flexographic printing plate precursor which is produced by using the resin composition for a flexographic printing plate of the present invention to comprise a photothermal conversion agent that has a maximun absorption wavelength at 700 to 1,300 nm.

As the photothermal conversion agent in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, and preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, and phthalocyanine-based colorants are preferably used. Examples include dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saishin Ganryo Ouyogijutsu' (Latest Applications of Pigment Technology) (CMC Publishing, 1986), 'Insatsu lnki Gijutsu' (Printing Ink Technology) (CMC Publishing, 1984). Examples of pigments include pigments described in paragraphs 0122 to 0125 of JP-A-2009-178869.

Among these pigments, carbon black is preferable.

Any carbon black, regardless of classification by ASTM (American Society for Testing and Materials) and application (e.g. for coloring, for rubber, for dry cell, etc.), may be used as long as dispersibility, etc. in the composition is stable. Examples of the carbon black include furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products. Examples of carbon black include carbon blacks described in paragraphs 0130 to 0134 of JP-A-2009-178869.

Component D in the resin composition of the present invention may be used singly or in a combination of two or more compounds.

The content of the photothermal conversion agent in the resin composition of the present invention may vary greatly with the magnitude of the molecular extinction coefficient inherent to the molecule, but the content is preferably 0.01 to 30 wt%, more preferably 0.05 to 20 wt%, and particularly preferably 0.1 to 10 wt%, relative to the total weight of the resin composition.

### (Component E) Plasticizer

The resin composition for a flexographic printing plate of the present invention may comprise a plasticizer. In the present invention, since a relief layer that is obtained has excellent flexibility due to Component A being contained, a plasticizer need not be added.

A plasticizer has the function of making a film formed from the resin composition flexible, and it is necessary for it to be compatible with a binder polymer.

Examples of the plasticizer include a phthalic acid ester such as dipentyl phthalate, dihexyl phthalate, dicyclohexyl phthalate, diphenyl phthalate, di-n-octyl phthalate, bis(2-ethylhexyl) phthalate, diisodecyl phthalate, ditridecyl phthalate, butylbenzyl phthalate, or bis(2-butoxyethyl) phthalate, a trimellitic acid ester such as tris(2-ethylhexyl) trimellitate or tributyl trimellitate, a phosphoric acid ester such as trihexyl phosphate, tris(2-ethylhexyl) phosphate, tributoxyethyl phosphate, tricyclohexyl phosphate, triphenyl phosphate, tribenzyl phosphate, tricresyl phosphate, cresyl diphenyl phosphate, tris{1,3-dichfora-2-propyl} phosphate, or tris(2-chloroethyl) phosphate, a malonic acid ester such as diethyl malonate, di-n-butyl malonate, or dibenzyl malonate, a succinic acid ester such as dibutyl succinate or dioctyl succinate, an adipic acid ester such as bis(2-butoxyethyl) adipate, dibutyl adipate, dimethyl adipate, or diisobutyl adipate, a sebacic acid ester such as dimethyl sebacate or di-n-butyl sebacate, a maleic acid ester such as dibutyl maleate, dihexyl maleate, or dioctyl maleate, a fumaric acid ester such as dibutyl fumarate, dihexyl fumarate, or dioctyl fumarate, triacetylene, tributyne, a triester compound such as tributyl citrate or triethyl citrate, and a fatty acid ester such as an acetic acid ester or a propionic acid ester.

With regard to Component E in the resin composition of the present invention, one type may be used on its own or two or more types may be used in combination.

From the viewpoint of stability over time, the content of the plasticizer in the resin composition for a flexographic printing plate of the present invention is preferably no greater than 50 wt% of the total solids content concentration, more preferably no greater than 30 wt%, yet more preferably no greater than 10 wt%, and particularly preferably none.

### (Component F) Solvent

(Component F) a solvent may be used when preparing the resin composition for a flexographic printing plate of the present invention.

When the solvent is used, an organic solvent is preferably used.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, *N-*methylpyrrolidone, and dimethyl sulfoxide.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.

Among these, propylene glycol monomethyl ether acetate is preferable.

The content of the solvent is not particularly limited, and the content necessary for forming a relief-forming layer, etc. may be added. Meanwhile, the solids content of the resin composition means the content except for the solvent in the resin composition.

### <Other additives>

The resin composition for a flexographic printing plate of the present invention may comprise as appropriate various types of known additives as long as the effects of the present invention are not inhibited. Examples include a filler, a wax, a fragrance, an ultraviolet absorbent, a glidant, a lubricant, a process oil, an a metal oxide, an antiozonant, an anti-aging agent, a thermopolymerization inhibitor, and a colorant, and one type thereof may be used on its own or two more types may be used in combination.

As the filler, inorganic particles can be cited.

The inorganic particles preferably have a number-average particle size of at least 0.01 µm but no greater than 10 µm. Furthermore, the inorganic particles are preferably porous particles or nonporous particles.

The porous particles referred to here are defined as particles having fine pores having a pore volume of at least 0.1 mL/g in the particle or particles having fine cavities.

The porous particles preferably have a specific surface area of at least 10 m²/g but no greater than 1,500 m²/g, an average pore diameter of at least 1 nm but no greater than 1,000 nm, a pore volume of at least 0.1 mL/g but no greater than 10 mL/g, and an oil adsorption of at least 10 mL/100 g but no greater than 2,000 mL/100 g. The specific surface area is determined based on the BET equation from the adsorption isotherm of nitrogen at -196°C. Furthermore, measurement of the pore volume and the average pore diameter preferably employs a nitrogen adsorption method. Measurement of the oil adsorption may be suitably carried out in accordance with JIS-K5101.

The number-average particle size of the porous particles is preferably at least 0.01 µm but no greater than 10 µm, more preferably at least 0.5 µm but no greater than 8 µm, and yet more preferably at least 1 µm but no greater than 5 µm.

The shape of the porous particles is not particularly limited, and spherical, flat-shaped, needle-shaped, or amorphous particles, or particles having projections on the surface, etc. may be used.

Furthermore, particles having a cavity in the interior, spherical granules having a uniform pore diameter such as a silica sponge, etc. may be used. Examples thereof are not particularly limited but include porous silica, mesoporous silica, a silica-zirconia porous gel, porous alumina, and a porous glass. Furthermore, as for a layered clay compound, pore diameter cannot be defined for those having a cavity of a few nm to a few hundred nm between layers, and in the present embodiment the distance between cavities present between layers is defined as the pore diameter.

Moreover, particles obtained by subjecting the surface of porous particles to a surface modifying treatment by covering with a silane coupling agent, a titanium coupling agent, or another organic compound so as to make the surface hydrophilic or hydrophobic may also be used. With regard to these porous particles, one type or two or more types may be selected.

The nonporous particles are defined as particles having a pore volume of less than 0.1 mL/g. The number-average particle size of the nonporous particles is the number-average particle size for primary particles as the target, and is preferably at least 10 nm but no greater than 500 nm, and more preferably at least 10 nm but no greater than 100 nm.

The amount of filler added is not particularly limited, but is preferably 1 to 100 parts by weight relative to 100 parts by weight of Component A.

### (Flexographic printing plate precursor)

A first embodiment of the flexographic printing plate precursor of the present invention comprises a relief-forming layer formed from the resin composition for a flexographic printing plate of the present invention.

A second embodiment of the flexographic printing plate precursor of the present invention comprises a crosslinked relief-forming layer formed by crosslinking a relief-forming layer formed from the resin composition for a flexographic printing plate of the present invention.

In the present invention, the 'flexographic printing plate precursor' means both or one of a flexographic printing plate precursor having a crosslinkable relief-forming layer formed from the resin composition for a flexographic printing plate in a state before being crosslinked and a flexographic printing plate precursor in a state in which it is cured by light or heat.

The flexographic printing plate precursor for laser engraving of the present invention is a flexographic printing plate precursor having a crosslinkable relief-forming layer cured by heat.

In the present invention, the 'relief-forming layer' means a layer in a state before being crosslinked, that is, a layer formed from the resin composition for a flexographic printing plate of the present invention, which may be dried as necessary.

In the present invention, the "crosslinked relief-forming layer" refers to a layer obtained by crosslinking the aforementioned relief-forming layer. The crosslinking can be performed by light and/or heat, and the crosslinking by heat is preferable. Moreover, the crosslinking is not particularly limited only if it is a reaction that cures the resin composition, and is a general idea that includes the crosslinked structure by the reaction of Component A with each other, and the reaction of Component A with other Component. When a polymerizable compound is used, the crosslinking includes a crosslinking by polymerization of polymerizable compounds.

The 'flexographic printing plate' is made by laser engraving the flexographic printing plate precursor having the crosslinked relief-forming layer.

Moreover, in the present invention, the 'relief layer' means a layer formed a printing surface with asperities in a flexographic printing plate.

A flexographic printing plate precursor of the present invention comprises a relief-forming layer formed from the resin composition for a flexographic printing plate, which has the above-mentioned components. The (crosslinked) relief-forming layer is preferably provided above a support.

The (crosslinked) flexographic printing plate precursor for laser engraving may further comprise, as necessary, an adhesive layer between the support and the (crosslinked) relief-forming layer and, above the relief-forming layer, a slip coat layer and a protection film.

### <Relief-forming layer>

The relief-forming layer is a layer formed from the resin composition for a flexographic printing plate of the present invention, and is preferably crosslinkable by heat.

As a mode in which a flexographic printing plate is prepared using the flexographic printing plate precursor, a mode in which a flexographic printing plate is prepared by crosslinking a relief-forming layer to thus form a flexographic printing plate precursor having a crosslinked relief-forming layer, and the surface of the crosslinked relief-forming layer (hard relief-forming layer) is form asperities and to thus form a relief layer is preferable. The asperities are preferably formed by laser engraving. By crosslinking the relief-forming layer, it is possible to prevent abrasion of the relief layer during printing, and it is possible to obtain a flexographic printing plate having a relief layer with a sharp shape.

The relief-forming layer may be formed by molding the resin composition for a flexographic printing plate that has the above-mentioned components for a relief-forming layer into a sheet shape or a sleeve shape. The relief-forming layer is usually provided above a support, which is described later, but it may be formed directly on the surface of a member such as a cylinder of equipment for plate producing or printing or may be placed and immobilized thereon, and a support is not always required.

A case in which the relief-forming layer is mainly formed in a sheet shape is explained as an example below.

### <Support>

A material used for the support of the flexographic printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), polybutylene terephthalate (PBT), or polyacrylonitrile (PAN)) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

### <Adhesive layer>

An adhesive layer may be provided between the relief-forming layer and the support for the purpose of strengthening the adhesion between the two layers. Examples of materials (adhesives) that can be used in the adhesive layer include those described in 'Handbook of Adhesives', Second Edition, Ed by I. Skeist, (1977).

### <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 µm, and more preferably 50 to 200 µm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

### (Process for producing flexographic printing plate precursor)

The process for producing a flexographic printing plate precursor is not particularly limited, and examples thereof include a method in which a resin composition for a flexographic printing plate is prepared, solvent is removed from the resin composition for a flexographic printing plate, and it is then melt-extruded onto a support. Alternatively, a method may be employed in which a resin composition for a flexographic printing plate is cast onto a support, and this is dried in an oven to thus remove solvent from the resin composition.

Among them, the process for producing a flexographic printing plate precursor of the present invention is preferably a production process comprising a layer formation step of forming a relief-forming layer from the resin composition for a flexographic printing plate of the present invention and a crosslinking step of crosslinking the relief-forming layer by means of heat and/or light to thus obtain a flexographic printing plate precursor having a crosslinked relief-forming layer, and more preferably a production process comprising a layer formation step of forming a relief-forming layer from the resin composition for a flexographic printing plate of the present invention and a crosslinking step of crosslinking the relief-forming layer by means of heat to thus obtain a flexographic printing plate precursor having a crosslinked relief-forming layer.

Subsequently, as necessary, a protection film may be laminated on the relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

### <Layer formation step>

The process for producing the flexographic printing plate precursor of the present invention preferably comprises a layer formation step of forming a relief-forming layer from the resin composition for a flexographic printing plate of the present invention.

Preferred examples of a method for forming the relief-forming layer include a method in which the resin composition for a flexographic printing plate of the present invention is prepared, solvent is removed as necessary from this resin composition for a flexographic printing plate, and it is then melt-extruded onto a support and a method in which the resin composition for a flexographic printing plate of the present invention is prepared, the resin composition for a flexographic printing plate of the present invention is cast onto a support, and this is dried in an oven to thus remove solvent.

The resin composition for a flexographic printing plate may be produced by, for example, dissolving or dispersing Components A, and optional components J in an appropriate solvent, and then dissolving Component B.

The thickness of the (crosslinked) relief-forming layer in the flexographic printing plate precursor is preferably 0.05 to 10 mm before and after crosslinking, more preferably 0.05 to 7 mm, and yet more preferably 0.05 to 3 mm.

### <Crosslinking step>

The process for producing a flexographic printing plate precursor of the present invention is preferably a production process comprising a crosslinking step of crosslinking the relief-forming layer by means of heat to thus obtain a flexographic printing plate precursor having a crosslinked relief-forming layer.

When the relief-forming layer comprises a photopolymerization initiator, the relief-forming layer may be crosslinked by irradiating the relief-forming layer with actinic radiation that triggers the photopolymerization initiator.

It is preferable to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need to be irradiated with light, but when the support is a transparent film through which actinic radiation passes, it is preferable to further irradiate from the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

When the relief-forming layer comprises thermal polymerization initiator (the photopolymerization initiator can also be a thermal polymerization initiator.), the relief-forming layer may be crosslinked by heating the flexographic printing plate precursor (step of crosslinking by means of heat). As heating means for carrying out crosslinking by heat, there can be cited a method in which a printing plate precursor is heated in a hot air oven or a far-infrared oven for a predetermined period of time and a method in which it is put into contact with a heated roller for a predetermined period of time.

As a method for crosslinking the relief-forming layer, from the viewpoint of the relief-forming layer being uniformly curable (crosslinkable) from the surface into the interior, crosslinking by heat is preferable.

Due to the relief-forming layer being crosslinked, firstly, a relief formed after laser engraving becomes sharp and, secondly, tackiness of engraving residue formed when laser engraving is suppressed. If an uncrosslinked relief-forming layer is laser-engraved, residual heat transmitted to an area around a laser-irradiated part easily causes melting or deformation of a part that is not targeted, and a sharp relief layer cannot be obtained in some cases. Furthermore, in terms of general properties of a material, the lower the molecular weight, the more easily it becomes a liquid than a solid, that is, there is a tendency for tackiness to increase. Engraving residue formed when engraving a relief-forming layer tends to have higher tackiness as larger amounts of low-molecular-weight materials are used. Since a polymerizable compound, which is a low-molecular-weight material, becomes a polymer by crosslinking, the tackiness of the engraving residue formed tends to decrease.

When the crosslinking step is a step of carrying out crosslinking by light, although equipment for applying actinic radiation is relatively expensive, since a printing plate precursor does not reach a high temperature, there are hardly any restrictions on starting materials for the printing plate precursor.

When the crosslinking step is a step of carrying out crosslinking by heat, although there is the advantage that particularly expensive equipment is not needed, since a printing plate precursor reaches a high temperature, it is necessary to carefully select the starting materials used while taking into consideration the possibility that a thermoplastic polymer, which becomes soft at high temperature, will deform during heating, etc.

During thermal crosslinking, it is preferable to add a thermopolymerization initiator. As the thermopolymerization initiator, a commercial thermopolymerization initiator for free radical polymerization may be used. Examples of such a thermopolymerization initiator include an appropriate peroxide, hydroperoxide, and azo group-containing compound. A representative vulcanizing agent may also be used for crosslinking. Thermal crosslinking may also be carried out by adding a heat-curable resin such as for example an epoxy resin as a crosslinking component to a layer.

### (Flexographic printing plate and process for making same)

The process for making a flexographic printing plate of the present invention preferably comprises an engraving step of laser-engraving the flexographic printing plate precursor having the crosslinked relief-forming layer.

The process for making a flexographic printing plate of the present invention more preferably comprises a layer formation step of forming a relief-forming layer from the resin composition for a flexographic printing plate of the present invention, a crosslinking step of crosslinking the relief-forming layer by means of heat and/or light to thus obtain a flexographic printing plate precursor having a crosslinked relief-forming layer, and an engraving step of laser-engraving the flexographic printing plate precursor having the crosslinked relief-forming layer, and yet more preferably comprises a layer formation step of forming a relief-forming layer from the resin composition for a flexographic printing plate of the present invention, a crosslinking step of crosslinking the relief-forming layer by means of heat to thus obtain a flexographic printing plate precursor having a crosslinked relief-forming layer, and an engraving step of laser-engraving the flexographic printing plate precursor having the crosslinked relief-forming layer.

The flexographic printing plate of the present invention is a flexographic printing plate having a relief layer obtained by crosslinking a layer formed from the resin composition for a flexographic printing plate of the present invention and by forming asperities on the surface thereof, and is preferably a flexographic printing plate made by the process for producing a flexographic printing plate of the present invention.

The flexographic printing plate of the present invention may suitably employ an aqueous ink when printing.

The layer formation step and the crosslinking step in the process for producing a flexographic printing plate of the present invention mean the same as the layer formation step and the crosslinking step in the above-mentioned process for producing a flexographic printing plate precursor for laser engraving, and preferred ranges are also the same.

### <Engraving step>

In the process for making a flexographic printing plate of the present invention, a method for forming asperities on the surface of the crosslinked relief-forming layer is not particularly limited, and a known method may be used, but they are preferably formed by laser engraving.

The process for making a flexographic printing plate of the present invention preferably comprises an engraving step of laser-engraving the flexographic printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (a CO₂ laser) or a semiconductor laser is preferable. In particular, a fiber-coupled semiconductor infrared laser (FC-LD) is preferably used. In general, compared with a CO₂ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is yet more preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, Applied Laser Technology, The Institute of Electronics and Communication Engineers, etc.

Moreover, as plate making equipment comprising a fiber-coupled semiconductor laser that can be used suitably in the process for making a flexographic printing plate employing the flexographic printing plate precursor of the present invention, those described in detail in JP-A-2003-172658 and JP-A-2009-214334 can be cited. Such equipment comprising a fiber-coupled semiconductor laser can be used to produce a flexographic printing plate of the present invention.

The process for producing a flexographic printing plate of the present invention may as necessary further comprise, after forming the relief layer, subsequent to the engraving step, a rinsing step, a drying step, and/or a post-crosslinking step, which are shown below, after forming the relief layer.

Rinsing step: a step of rinsing the engraved surface by rinsing the engraved relief layer surface with water or a liquid comprising water as a main component.

Drying step: a step of drying the engraved relief layer.

Post-crosslinking step: a step of further crosslinking the relief layer by applying energy to the engraved relief layer.

After the above-mentioned step, since engraved residue is attached to the engraved surface, a rinsing step of washing off engraved residue by rinsing the engraved surface with water or a liquid comprising water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraved residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.5, and yet more preferably no greater than 13.1. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant.

From the viewpoint of removability of engraved residue and little influence on a flexographic printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 wt% relative to the total weight of the rinsing liquid, and more preferably 0.05 to 10 wt%.

The flexographic printing plate of the present invention having a relief layer above the surface of an optional substrate such as a support may be produced as described above.

From the viewpoint of satisfying suitability for various aspects of printing, such as abrasion resistance and ink transfer properties, the thickness of the relief layer of the flexographic printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the flexographic printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target at 25°C so as to deform it, measures the amount of deformation (indentation depth), and converts it into a numerical value.

The flexographic printing plate of the present invention is particularly suitable for printing by a flexographic printer using an aqueous ink, but printing is also possible when it is carried out by a letterpress printer using any of aqueous, oil-based, and UV inks, and printing is also possible when it is carried out by a flexographic printer using a UV ink. The flexographic printing plate of the present invention has excellent rinsing properties, there is no engraved residue, and has excellent printing durability, and printing can be carried out for a long period of time without plastic deformation of the relief layer or degradation of printing durability.

### Examples

The present invention is explained in further detail below by reference to Examples, but the present invention should not be construed as being limited to these Examples. Furthermore, 'parts' in the description below means 'parts by weight', and '%' means '% by weight', unless otherwise specified.

Moreover, the number-average molecular weight (Mn) of a polymer in the Examples are values measured by a GPC method unless otherwise specified.

### <Measurement of number-average molecular weight (Mn) of resin>

The number-average molecular weight of a resin was determined using gel permeation chromatography (GPC) on the basis of a polystyrene of known molecular weight. Measurement was carried out using a high performance GPC system (HLC-8020, Tosoh Corporation) and a polystyrene-packed column (TSKgel GMHXL, Tosoh Corporation) while developing with tetrahydrofuran (TFiF). The temperature of the column was set at 40°C. As the sample that was injected into the GPC system, a THF solution having a resin concentration of 1 wt% was prepared, and the amount injected was 10 µL. Furthermore, as a detector, a resin UV absorption detector was used, and as a monitoring light, light at 254 nm was used.

### <Synthetic Example 1>

As a prepolymer, a polyester having a hydroxy group at both termini was synthesized by a known method from ethylene glycol and maleic acid. The number-average molecular weight by GPC was Mn = 8,500.

A separable flask equipped with a stirrer was charged with 50.0 parts of the above prepolymer, 15.52 parts of methacrylic acid anhydride, and 5.06 parts of triethylamine, and stirring was carried out under dry air at 40°C for 1 hour, thus giving resin A-1, which had a methacryloyl group introduced at a terminal and a maleic acid-derived ethylenically unsaturated bond in the interior. The number-average molecular weight by GPC was Mn = 9,500. Furthermore, resin A-1 was a syrup at 20°C, flowed when an external force was applied, and did not recover to its original state even when the external force was removed.

5.23 parts of hydroxyethyl methacrylate, 2.9 parts of trimethylolpropane trimethacrylate, 2.70 parts of silica gel C-1540 (Fuji Silysia Chemical Ltd.), 0.59 parts of silicone oil KF-410 (Shin-Etsu Chemical Co., Ltd.), 0.35 parts of 2,2-dimethoxy-2-phenylacetophenone, 0.59 parts of benzophenone, 0.35 parts of 2,6-di-tert-butyl-4-methylphenol, 1.06 parts of triphenyl phosphate, and 0.59 parts of Sanol LS-785 (Sankyo) were added to 40 parts of resin A-1, and degassing was carried out at 80°C by decreasing the pressure to 13 kPa while stirring, thus giving a resin composition that was a viscous liquid at room temperature (20°C, the same applies below).

### <Synthetic Example 2>

Resin A-2, which had an acryloyl group introduced at a terminal and a maleic acid-derived ethylenically unsaturated bond in the interior, was obtained in the same manner as in Synthetic Example 1 except that the methacrylic acid anhydride in Synthetic Example 1 was changed to 12.70 parts of acrylic acid anhydride. The number-average molecular weight by GPC was Mn = 9,300. Furthermore, resin A-2 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-2.

### <Synthetic Example 3>

As a prepolymer, a polyester having a carboxy group at both termini was synthesized by a known method from ethylene glycol and maleic acid. The number-average molecular weight by GPC was Mn = 8,000. Furthermore, this polyester, which had carboxyl groups at both termini, and 2-hydroxyethyl methacrylate, which has a hydroxy group, were subjected to esterification by a known method, thus giving resin A-3, which had a methacryloyl group introduced at a terminal and a maleic acid-derived ethylenically unsaturated bond in the interior. The number-average molecular weight by GPC was Mn = 8,400. Furthermore, resin A-3 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-3.

### <Synthetic Example 4>

As a prepolymer, a polyester having a hydroxy group at both termini was synthesized by a known method from ethylene glycol and maleic acid. The number-average molecular weight by GPC was Mn = 8,500.

A separable flask equipped with a stirrer was charged with 50.0 parts of the above prepolymer, 7.76 parts of Karenz MOI (2-isocyanatoethyl methacrylate, Showa Denko K.K.), and 0.78 parts of Neostann U-600 (bismuth-based catalyst, Nitto Chemical Industry Co., Ltd.), and stirring was carried out under dry air at 80°C for 3 hours, thus giving resin A-4, which had a methacryloyl group introduced at a terminal and a maleic acid-derived ethylenically unsaturated bond in the interior. The number-average molecular weight by GPC was Mn = 8,900. Furthermore, resin A-4 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-4.

### <Synthetic Example 5>

Resin A-5, which had an acryloyl group introduced at a terminal and a maleic acid-derived ethylenically unsaturated bond in the interior, was obtained in the same manner as in Synthetic Example 4 except that the Karenz MOI of Synthetic Example 4 was changed to 7.06 parts of Karenz AOI (2-isocyanatoethyl acrylate, Showa Denko K.K.) and 0.71 parts of Neostann U-600 (Nitto Chemical Industry Co., Ltd.). The number-average molecular weight by GPC was Mn = 8,700. Furthermore, resin A-5 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-5.

### <Synthetic Example 6>

As a prepolymer, a polyester having a hydroxy group at both termini was synthesized by a known method from cis-2-butene-1,4-diol and maleic acid. The number-average molecular weight by GPC was Mn = 8,400.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-6, which had a methacryloyl group introduced at a terminal and cis-2-butene-1,4-diol- and maleic acid-derived ethylenically unsaturated bonds in the interior. The number-average molecular weight by GPC was Mn = 9,000. Furthermore, resin A-6 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-6.

### <Synthetic Example 7>

As a prepolymer, a polyester having a hydroxy group at both termini was synthesized by a known method from cis-2-butene-1,4-diol and fumaric acid. The number-average molecular weight by GPC was Mn = 8,400.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-7, which had a methacryloyl group introduced at a terminal and cis-2-butene-1,4-diol- and fumaric acid-derived ethylenically unsaturated bonds in the interior. The number-average molecular weight by GPC was Mn = 9,000. Furthermore, resin A-7 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-7.

### <Synthetic Example 8>

As a prepolymer, a polyester having a hydroxy group at both termini was synthesized by a known method from cis-2-butene-1,4-diol and itaconic acid. The number-average molecular weight by GPC was Mn = 8,500.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-8, which had a methacryloyl group introduced at a terminal and cis-2-butene-1,4-diol- and itaconic acid-derived ethylenically unsaturated bonds in the interior. The number-average molecular weight by GPC was Mn = 9,200. Furthermore, resin A-8 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-8.

### <Synthetic Example 9>

As a prepolymer, a polyester having a hydroxy group at both termini was synthesized by a known method from cis-2-butene-1,4-diol and citraconic acid. The number-average molecular weight by GPC was Mn = 8,600.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-9, which had a methacryloyl group introduced at a terminal and cis-2-butene-1,4-diol- and citraconic acid-derived ethylenically unsaturated bonds in the interior. The number-average molecular weight by GPC was Mn = 9,500. Furthermore, resin A-9 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-9.

### <Synthetic Example 10>

As a prepolymer, a polyester having a hydroxy group at both termini was synthesized by a known method from 1,2-propanediol and maleic acid. The number-average molecular weight by GPC was Mn = 8,000.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-10, which had a methacryloyl group introduced at a terminal and a maleic acid-derived ethylenically unsaturated bond in the interior. The number-average molecular weight by GPC was Mn = 8,500. Furthermore, resin A-10 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-10.

### <Synthetic Example 11>

As a prepolymer, a polyester having a hydroxy group at both termini was synthesized by a known method from 1,3-propanediol and maleic acid. The number-average molecular weight by GPC was Mn = 8,100.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-11, which had a methacryloyl group introduced at a terminal and a maleic acid-derived ethylenically unsaturated bond in the interior. The number-average molecular weight by GPC was Mn = 8,500. Furthermore, resin A-11 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-11.

### <Synthetic Example 12>

As a prepolymer, a polyester having a hydroxy group at both termini was synthesized by a known method from 1,2-cyclohexanediol and maleic acid. The number-average molecular weight by GPC was Mn = 8,800.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-12, which had a methacryloyl group introduced at a terminal and a maleic acid-derived ethylenically unsaturated bond in the interior. The number-average molecular weight by GPC was Mn = 9,300. Furthermore, resin A-12 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-12.

### <Synthetic Example 13>

As a prepolymer, a polyester having a hydroxy group at both termini was synthesized by a known method from diethylene glycol and maleic acid. The number-average molecular weight by GPC was Mn = 8,700.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-13, which had a methacryloyl group introduced at a terminal and a maleic acid-derived ethylenically unsaturated bond in the interior. The number-average molecular weight by GPC was Mn = 9,100. Furthermore, resin A-13 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-13.

### <Synthetic Example 14>

As a prepolymer, a polyester having a hydroxy group at both termini was synthesized by a known method from ethylene glycol and fumaric acid. The number-average molecular weight by GPC was Mn = 8,500.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-14, which had a methacryloyl group introduced at a terminal and a fumaric acid-derived ethylenically unsaturated bond in the interior. The number-average molecular weight by GPC was Mn = 8,900. Furthermore, resin A-14 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-14.

### <Synthetic Example 15>

As a prepolymer, a polyester having a hydroxy group at both termini was synthesized by a known method from 1,2-propanediol and fumaric acid. The number-average molecular weight by GPC was Mn = 8,600.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-15, which had a methacryloyl group introduced at a terminal and a fumaric acid-derived ethylenically unsaturated bond in the interior. The number-average molecular weight by GPC was Mn = 9,100. Furthermore, resin A-15 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-15.

### <Synthetic Example 16>

As a prepolymer, a polyester having a hydroxy group at both termini was synthesized by a known method from 1,3-propanediol and fumaric acid. The number-average molecular weight by GPC was Mn = 8,700.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-16, which had a methacryloyl group introduced at a terminal and a fumaric acid-derived ethylenically unsaturated bond in the interior. The number-average molecular weight by GPC was Mn = 9,200. Furthermore, resin A-16 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-16.

### <Synthetic Example 17>

As a prepolymer, a polyester having a hydroxy group at both termini was synthesized by a known method from cis-2-butene-1,4-diol and oxalic acid. The number-average molecular weight by GPC was Mn = 9,000.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-17, which had a methacryloyl group introduced at a terminal and a cis-2-butene-1,4-diol-derived ethylenically unsaturated bond in the interior. The number-average molecular weight by GPC was Mn = 9,400. Furthermore, resin A-17 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-17.

### <Synthetic Example 18>

As a prepolymer, a polyester having a hydroxy group at both termini was synthesized by a known method from cis-2-butene-1,4-diol and succinic acid. The number-average molecular weight by GPC was Mn = 8,900.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-18, which had a methacryloyl group introduced at a terminal and a cis-2-butene-1,4-diol-derived ethylenically unsaturated bond in the interior. The number-average molecular weight by GPC was Mn = 9,400. Furthermore, resin A-18 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-18.

### <Synthetic Example 19>

As a prepolymer, a polyester having a hydroxy group at both termini was synthesized by a known method from cis-2-butene-1,4-diol and adipic acid. The number-average molecular weight by GPC was Mn = 9,200.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-19, which had a methacryloyl group introduced at a terminal and a cis-2-butene-1,4-diol-derived ethylenically unsaturated bond in the interior. The number-average molecular weight by GPC was Mn = 9,800. Furthermore, resin A-19 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-19.

### <Synthetic Example 20>

As a prepolymer, a polyester having a hydroxy group at both termini was synthesized by a known method from cis-2-butene-1,4-diol and sebacic acid. The number-average molecular weight by GPC was Mn = 9,600.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-20, which had a methacryloyl group introduced at a terminal and a cis-2-butene-1,4-diol-derived ethylenically unsaturated bond in the interior. The number-average molecular weight by GPC was Mn = 10,000. Furthermore, resin A-20 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-20.

### <Comparative Synthetic Example 1>

A resin composition that was a viscous liquid at room temperature was obtained in the same manner as in Synthetic Example 1 except that the polyester synthesized from ethylene glycol and maleic acid in Synthetic Example 1 was defined as A-23, and resin A-1 was changed to resin A-23.

### <Comparative Synthetic Example 2>

As a prepolymer, a polyester having a hydroxy group at both termini was synthesized by a known method from ethylene glycol and succinic acid. The number-average molecular weight by GPC was Mn = 8,400.

A separable flask equipped with a stirrer was charged with 50.0 parts of the above prepolymer, 7.76 parts of Karenz MOI (Showa Denko K.K.), and 0.78 parts of Neostann U-600 (Nitto Chemical Industry Co., Ltd.), and stirring was carried out under dry air at 80°C for 3 hours, thus giving resin A-24, which had a methacryloyl group at a terminal but did not have an ethylenically unsaturated bond in the interior of the resin. The number-average molecular weight by GPC was Mn = 9,000. Furthermore, resin A-24 was a syrup at 20°C, flowed when an external force was applied, and did not recover to its original state even when the external force was removed.

A resin composition that was a viscous liquid at room temperature was obtained in the same manner as in Synthetic Example 1 except that resin A-1 was changed to resin A-24.

### <Comparative Synthetic Example 3>

As a prepolymer, a polyurethane resin having a hydroxy group at both termini was synthesized by a known method from ethylene glycol and m-tolylene diisocyanate.

A methacryloyl group was introduced at the terminal of the prepolymer by the same method as in Synthetic Example 5 of JP-A-2009-235295, thus giving resin A-25 below. The number-average molecular weight by GPC was Mn = 7,000.

A resin composition that was a viscous liquid at room temperature was obtained in the same manner as in Synthetic Example 1 except that resin A-1 was changed to resin A-25.

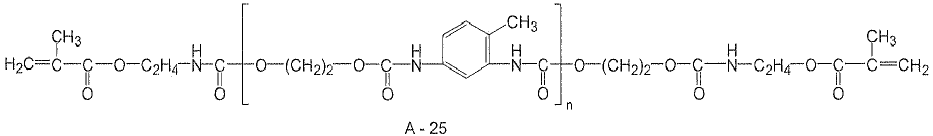

### (Examples 1 to 20 and Comparative Examples 1 to 3)

A flexographic printing plate precursor was produced by the method below using each of the resin compositions obtained in the Synthetic Examples and Comparative Synthetic Examples. Examples 1 to 20 employed the resin compositions synthesized in Synthetic Examples 1 to 20, and Comparative Examples 1 to 3 employed those in Comparative Synthetic Examples 1 to 3.

A 12 cm × 11 cm × 0.3 cm glass plate was coated thinly with diethylene glycol, a PET film was placed thereon, and they were put into intimate contact by rubbing with a spatula. A 10 cm square frame formed from a sponge frame fixed by double-sided tape was placed on the film, and a 3 mm thick aluminum spacer was placed on four corners outside the frame. A jig thus produced was placed on a hot plate at about 90°C.

Each of the above-mentioned resin compositions was poured within the frame of the jig, and this was then covered with a glass plate coated with diethylene glycol and having placed thereon a PET film such that the PET film surface was in contact with the resin composition. The upper and lower glass plates were then clamped by means of a clip and fixed.

This jig was subjected to exposure at 500 mJ/cm² (illumination intensity 33.7 mW/cm², time 14.8 seconds) using a high pressure mercury lamp (HC-98, Senengineering Co., Ltd.), then turned over, and further subjected to exposure with 500 mJ/cm². This was repeated once more for each side to give a total exposure of 2,000 mJ/cm², thus producing a flexographic printing plate precursor.

The flexographic printing plate precursor thus obtained was engraved using the two types of laser below.

As a carbon dioxide laser engraving machine, for engraving by irradiation with a laser, an ML-9100 series high quality CO₂ laser marker (Keyence) was used. A 1 cm square solid printed area was raster-engraved using the carbon dioxide laser engraving machine under conditions of an output of 12 W, a head speed of 200 mm/sec, and a pitch setting of 2,400 DPI.

As a semiconductor laser engraving machine, laser recording equipment provided with an SDL-6390 fiber-coupled semiconductor laser (FC-LD) (JDSU, wavelength 915 nm) with a maximum power of 8.0 W was used. A 1 cm square solid printed area was raster-engraved using the semiconductor laser engraving machine under conditions of a laser output of 7.5 W, a head speed of 409 mm/sec, and a pitch setting of 2,400 DPI.

The thickness of the relief layer of each of the flexographic printing plates thus obtained was about 1 mm.

The results of printing durability (print length (m) up to the end of printing) and ink laydown are shown for the Examples and Comparative Examples.

### <Printing durability>

A flexographic printing plate that had been obtained was set in a printer (Model ITM-4, IYO KIKAI SEISAKUSHO Co., Ltd.), as the ink Aqua SPZ16 Red aqueous ink (Toyo Ink Manufacturing Co., Ltd.) was used without dilution, printing was started using Full Color Form M 70 (Nippon Paper Industries Co., Ltd., thickness 100 µm) as the printing paper, and the end of printing was defined as being when there was a halftone dot that was not printed.

### <Ink laydown>

A flexographic printing plate that had been obtained was set in a printer (Model ITM-4, IYO KIKAI SEISAKUSHO Co., Ltd.), as the ink Aqua SPZ16 Red aqueous ink (Toyo Ink Manufacturing Co., Ltd.) was used without dilution, printing was started using Full Color Form M 70 (Nippon Paper Industries Co., Ltd., thickness 100 µm) as the printing paper, and the degree of ink attachment in a solid printed area on the printed material at 1,000 m from the start of printing was compared by visual inspection. The evaluation criteria were as follows.
Good: uniform without density unevenness.
Poor: density was uneven.

**(Table 1)**

| | Component A | | | | | | | Printing durability (m) | Ink laydown |
|---|---|---|---|---|---|---|---|---|---|
| | Ethylenically unsaturated bond | | Prepolymer starting material | | Terminal group type | Number of urethane bonds | Mn | | |
| | Interior Terminal | | | | | | | | |
| Example 1 | Yes | Yes | Ethylene glycol | Maleic acid | Methacryloyl group | 0 | 9.500 | 100 000 | Good |
| Example 2 | Yes | Yes | Ethylene glycol | Maleic acid | Acryloyl group | 0 | 9,300 | 99,000 | Good |
| Example 3 | Yes | Yes | Ethylene glycol | Maleic acid | Methacryloyl group | 0 | 8,400 | 100,000 | Good |
| Example 4 | Yes | Yes | Ethylene glycol | Maleic acid | Methacryloyl group | 2 | 8,900 | 150 000 | Good |
| Example 5 | Yes | Yes | Ethylene glycol | Maleic acid | Acryloyl group | 2 | 8,700 | 99,000 | Good |
| Example 6 | Yes | Yes | cis-2-Butene-1,4-diol | Maleic acid | Methacryloyl group | 2 | 9,000 | 120,000 | Good |
| Example 7 | Yes | Yes | cis-2-Butene-1,4-diol | Fumaric acid | Methacryloyl group | 2 | 9,000 | 120,000 | Good |
| Example 8 | Yes | Yes | cis-2-Butene-1,4-diol | Itaconic acid | Methacryloyl group | 2 | 9,200 | 100,000 | Good |
| Example 9 | Yes | Yes | cis-2-Butene-1,4-diol | Citraconic acid | Methacryloyl group | 2 | 9,500 | 100,000 | Good |
| Example 10 | Yes | Yes | 1,2-Propanediol | Maleic acid | Methacryloyl group | 2 | 8,500 | 100,000 | Good |
| Example 11 | Yes | Yes | 1,3-Propanediol | Maleic acid | Methacryloyl group | 2 | 8,500 | 110,000 | Good |
| Example 12 | Yes | Yes | 1,2-Cyclohexanediol | Maleic acid | Methacryloyl group | 2 | 9,300 | 99,000 | Good |
| Example 13 | Yes | Yes | Diethylene glycol | Maleic acid | Methacryloyl group | 2 | 9,100 | 99,000 | Good |
| Example 14 | Yes | Yes | Ethylene glycol | Fumaric acid | Methacryloyl group | 2 | 8 900 | 130,000 | Good |
| Example 15 | Yes | Yes | 1,2-Propanediol | Fumaric acid | Methacryloyl group | 2 | 9 100 | 100,000 | Good |
| Example 16 | Yes | Yes | 1,3-Propanediol | Fumaric acid | Methacryloyl group | 2 | 9,200 | 140,000 | Good |
| Example 17 | Yes | Yes | cis-2-Butene-14-diol | Oxalic acid | Methacryloyl group | 2 | 9,400 | 100,000 | Good |
| Example 18 | Yes | Yes | cis-2-Butene-1,4-diol | Succinic acid | Methacryloyl group | 2 | 9,400 | 100,000 | Good |
| Example 19 | Yes | Yes | cis-2-Butene-1 4-diol | Adipic acid | Methacryloyl group | 2 | 9,800 | 100,000 | Good |
| Example 20 | Yes | Yes | cis-2-Butene-1,4-diol | Sebacic acid | Methacryloyl group | 2 | 10,000 | 100,000 | Good |
| Comparative Example 1 | Yes | No | Ethylene glycol | Maleic acid | | 0 | 8,500 | 47,000 | Good |
| Comparative Example 2 | No | Yes | Ethylene glycol | Succinic acid | Methacryloyl group | 2 | 9,000 | 60,000 | Good |
| Comparative Example 3 | No | Yes | Polyurethane resin | | Methacryloyl group | Many | 7,000 | 90,000 | Poor |

## Claims

1. A resin composition for a flexographic printing plate, comprising (Component A) a polyester resin having an ethylenically unsaturated bond in the interior and at a terminal.

2. The resin composition for a flexographic printing plate according to Claim 1, wherein a group comprising the ethylenically unsaturated bond at a terminal of Component A is a group represented by Formula (1) below, 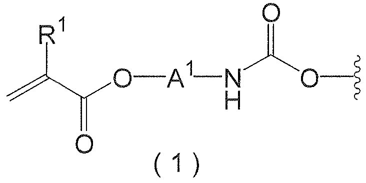 wherein in Formula (1), R¹ denotes a hydrogen atom or a methyl group, A¹ denotes a divalent linking group, and the wavy line portion denotes the position of bonding to another structure.

3. The resin composition for a flexographic printing plate according to Claim 1 or 2, wherein Component A is a resin represented by Formula (2) below, 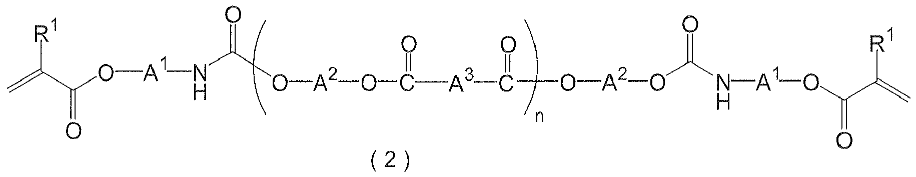 wherein in Formula (2), the R¹s independently denote a hydrogen atom or a methyl group, the A¹s, the A²s, and the A³s independently denote a divalent linking group, n denotes an integer of 1 or more, and at least one of A² and A³ is an ethylenically unsaturated bond-containing divalent linking group.

4. The resin composition for a flexographic printing plate according to any one of Claims 1 to 3, wherein Component A is a resin represented by Formula (3) below, 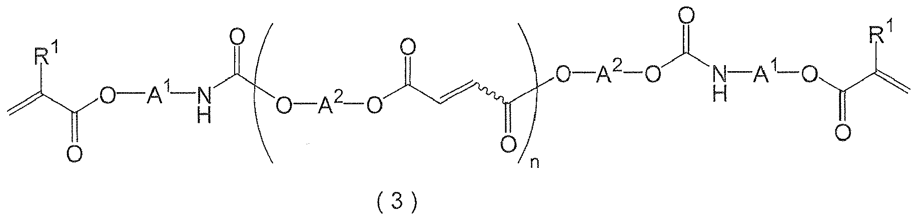 wherein in Formula (3), the R¹s independently denote a hydrogen atom or a methyl group, the A¹s and the A²s independently denote an alkylene group, and n denotes an integer of 1 or more.

5. The resin composition for a flexographic printing plate according to any one of Claims 1 to 4, wherein the resin composition further comprises (Component B) a polymerization initiator.

6. The resin composition for a flexographic printing plate according to any one of Claims 1 to 5, wherein the resin composition further comprises (Component C) an ethylenically unsaturated compound other than Component A.

7. The resin composition for a flexographic printing plate according to any one of Claims 1 to 6, wherein the resin composition is a resin composition for a laser-engraving type flexographic printing plate.

8. A flexographic printing plate precursor comprising a relief-forming layer comprising the resin composition for a flexographic printing plate according to any one of Claims 1 to 7.

9. A flexographic printing plate precursor, comprising a crosslinked relief-forming layer formed by crosslinking by means of light and/or heat a relief-forming layer comprising the resin composition for a flexographic printing plate according to any one of Claims 1 to 7.

10. A process for producing a flexographic printing plate precursor, comprising:
a layer formation step of forming a relief-forming layer comprising the resin composition for a flexographic printing plate according to any one of Claims 1 to 7; and
a crosslinking step of crosslinking the relief-forming layer by means of light and/or heat to thus obtain a flexographic printing plate precursor comprising a crosslinked relief-forming layer.

11. The process for producing a flexographic printing plate precursor according to Claim 10, wherein the crosslinking step is a step of crosslinking the relief-forming layer by means of light to thus obtain a flexographic printing plate precursor comprising a crosslinked relief-forming layer.

12. A process for making a flexographic printing plate, comprising:
an engraving step of laser-engraving the crosslinked relief-forming layer of the flexographic printing plate precursor according to Claim 9 to thus form a relief layer.

13. A flexographic printing plate comprising a relief layer made by the process for making a flexographic printing plate according to Claim 12.

14. The fleoographic printing plate according to Claim 13, wherein the relief layer has a thickness of at least 0.05 mm but no greater than 10 mm.
